# EUROPEAN PATENT SPECIFICATION

(11) **EP 3 264 052 B1**
(45) Date of publication and mention of the grant of the patent: **22.07.2020**
(21) Application number: 17177046.4
(22) Date of filing: 21.06.2017
(51) Int. Cl.: G01F 23/38, G01F 23/76, H01H 36/00, H01H 35/18, H01H 36/02

(54) **FLOAT LEVEL SENSING DEVICE**
SCHWIMMERSTANDMESSVORRICHTUNG
DISPOSITIF DE DÉTECTION DE NIVEAU DE CARBURANT

(30) Priority: 22.06.2016 TW 105119636
(43) Date of publication of application: 03.01.2018
(73) Proprietor: Fu Sheng Industrial Co., Ltd., Taipei City 104 (TW)
(72) Inventor: LIN, Wei-Hsu, 104 Zhongshan Dist., Taipei City (TW); LIU, Yao-Chung, 104 Zhongshan Dist., Taipei City (TW)
(74) Representative: 2K Patentanwälte Blasberg Kewitz & Reichel

(56) References cited:
- GB-A- 707 408
- US-A- 2 445 268
- US-A- 2 558 344
- US-A- 2 725 439
- US-A- 3 866 470
- US-A1- 2016 123 788

## Description

### Technical Field

The present invention relates to a level sensor and, in particular, to a float level sensing device.

### Background

When a compressor is in operation, a coolant serves to lubricate compressor components and to cool off the compressor components to prevent them from overheating, thereby prolonging a lifespan of the compressor and improving operation efficiency.

However, as the compressor operates, the coolant is consumed and becomes less and less. In order to make sure that the coolant is of a sufficient amount, most compressors have a level sensor to detect the amount of the coolant. When the level sensor detects that the amount of coolant is insufficient, the level sensor sends out alert signals that the coolant is of an insufficient amount. Alternatively, the level sensor sends the signal to a controller, so the controller can then control to add the coolant. On the contrary, when the level sensor detects that a liquid level of the coolant is within a predetermined range, no alert signals would be generated, thus ensuring safety operation of the compressor.

However, in the conventional level sensors for the compressors, a float ball is usually connected to a main body by welding. As a result, when airflow in the compressor causes the liquid level of the coolant to fluctuate drastically, the float ball may hit the main body to cause the float ball to break from its welded junctions, which is a problem that should be solved.

Documents GB 707 408. A discloses a liquid level transducer including a mounting head for connection to the wall of a tank and a housing extending into the tank from the mounting head. A float rod is pivotally connected to the housing and a float is connected to the float rod for pivotal movement upon a change of liquid level in the tank. A proximal end of the float rod is connected to an actuator portion and constrained for pivotal movement about two parallel axes so that the actuator portion moves in a linear direction with respect to the housing. The interior of the housing includes a sensor assembly responsive to the linear movement of the actuator portion to thereby determine the level of liquid within the tank.

US 2016 / 123788 A1 discloses a liquid level transducer including a mounting head for connection to the wall of a tank and a housing extending into the tank from the mounting head. A float rod is pivotally connected to the housing and a float is connected to the float rod for pivotal movement upon a change of liquid level in the tank. A proximal end of the float rod is connected to an actuator portion and constrained for pivotal movement about two parallel axes so that the actuator portion moves in a linear direction with respect to the housing. The interior of the housing includes a sensor assembly responsive to the linear movement of the actuator portion to thereby determine the level of liquid within the tank.

### SUMMARY

It is an object of the present invention to provide a float level sensing device, whereby a swing arm connected to a ball does not break easily by great fluctuation of an oil level, and detection accuracy and reliability are improved.

Accordingly, the present invention provides a float level sensing device including a main body, a frame body and a float member. The main body includes a magnetic reed switch. The frame body is assembled to the main body, the frame body includes an accommodating space, and the magnetic reed switch is disposed corresponding to the accommodating space. The float member is rotatably pivotally connected to the frame body, the float member includes a ball and a swing arm connected to the ball, and the swing arm extends into the accommodating space and is movable with respect to the magnetic reed switch.

The present invention further has the following functions. The float member (the ball) is connected to the frame body by means of a pivot. Therefore, when a level of stored oil fluctuates greatly, the ball can rotate or swing by means of the pivot to thereby distribute away forces caused by the great oil level change. As a result, the float level sensing device has a long lifespan, and detection accuracy and reliability are also improved.

### BRIEF DESCRIPTION OF THE DRAWINGS

The disclosure will become more fully understood from the detailed description, and the drawings given herein below is for illustration only, and thus does not limit the disclosure, wherein:
FIG. 1 is a perspective view illustrating a float level sensing device according to the first embodiment of the present invention;
FIG. 2 is another perspective view illustrating the float level sensing device according to the first embodiment of the present invention;
FIG. 3 is a cross-sectional view illustrating the float level sensing device according to the first embodiment of the present invention;
FIG. 4 is another cross-sectional view illustrating the float level sensing device according to the first embodiment of the present invention;
FIG. 5 is a perspective view illustrating the float level sensing device according to the second embodiment of the present invention;
FIG. 6 is a cross-sectional view illustrating the float level sensing device according to the second embodiment of the present invention;
FIG. 7 is another cross-sectional view illustrating the float level sensing device according to the second embodiment of the present invention; and
FIG. 8 is a cross-sectional view illustrating the float level sensing device according to the third embodiment of the present invention.

### DETAILED DESCRIPTION

Detailed descriptions and technical contents of the present invention are illustrated below in conjunction with the accompany drawings. However, it is to be understood that the descriptions and the accompany drawings disclosed herein are merely illustrative and exemplary and not intended to limit the scope of the present invention.

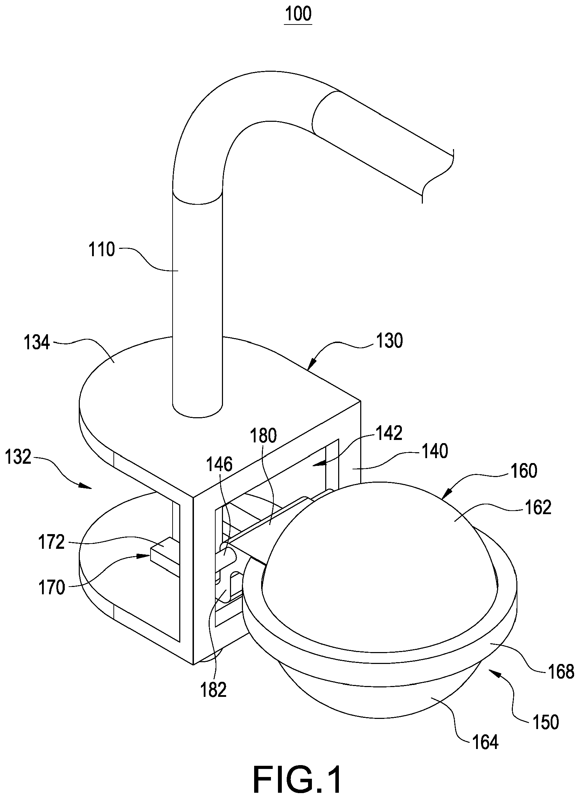

Referring to Figs. 1 to 4, the present invention provides a float level sensing device 100 comprising a main body 110, a frame body 130 and a float member 150. The float level sensing device 100 is preferably used in an oil tank (not illustrated) for storing a liquid. The oil tank includes, but not limited to, an oil container of a compressor, a generator, or other device, which needs to control liquid flowing in or out.

The main body 110 is, for example, a tube or a rod. A magnetic reed switch 120 is disposed inside the main body 110. In the working principle of the magnetic reed switch 120, normally when an external magnet is getting closer, two reeds (not illustrated) contact to switch the magnetic reed switch 120 into a closed-circuit state (i.e. a conductive state). When the external magnet is moving away from the magnetic reed switch 120, two reeds are separated to return to their original positions, so the magnetic reed switch 120 is switched to an open-circuit state (i.e. a broken-circuit state).

The frame body 130 is assembled to the main body 110. The frame body 130 includes an accommodating space 132 and two flat plates 134 opposite to each other, defining the accommodating space 132. The main body 110 passes through the two flat plates 134, and the two flat plates 134 are fixed to the main body 110. In the present embodiment, it is preferable that two flat plates 134 of the frame body 130 are fixed to the main body 110 which passes through the two flat plates 134. The float member 150 is rotatably pivotally connected to the frame body 130, the float member 150 includes a ball 160 and a swing arm 170 connected to the ball 160. The swing arm 170 extends into the accommodating space 132 and is movable with respect to the magnetic reed switch 120.

In the first embodiment of the present invention, the float member 150 further includes a supporter 180 connected to the swing arm 170, a first half housing 162 connected to the supporter 180, and a second half housing 164 sealingly covers the first half housing 162. The swing arm 170 is integrally formed with the supporter 180 and is bent from the supporter 180. The first half housing 162 and the supporter 180 are preferably in an integral form, thus enhancing the structural strength of the swing arm 170 (i.e. the float member 150). The frame body 130 further includes a rectangular frame 140 vertically connected to the two flat plates 134, an opening 142 formed in the rectangular frame 140, and a pivot 146 pivotally connected to opposite sides of the rectangular frame 140. The pivot 146 is connected to the supporter 180, so that the float member 150 is rotatable about the pivot 146.

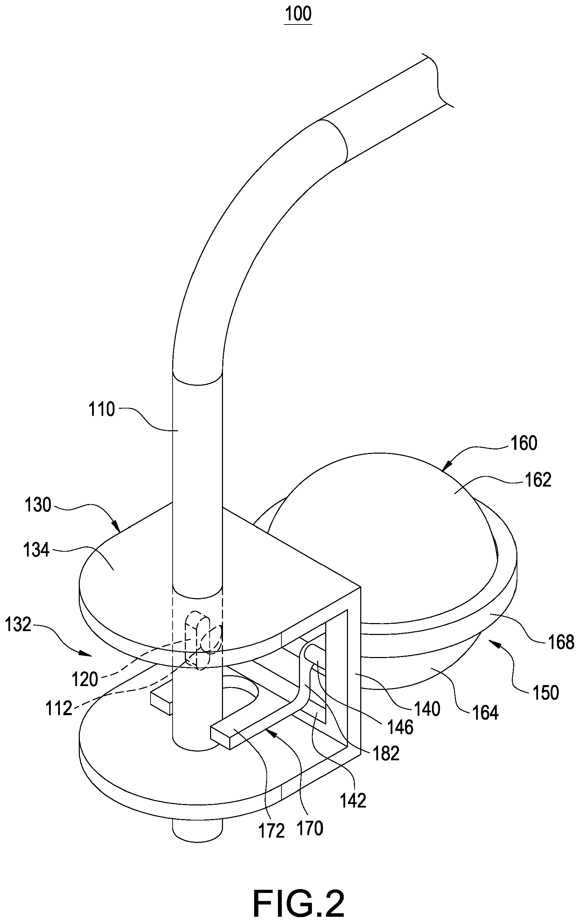

Furthermore, the float member 150 further includes a bent portion 182 disposed between the supporter 180 and the swing arm 170, and the bent portion 182 is bent toward the second half housing 164. The swing arm 170 extends into the accommodating space 132 to magnetically induce the magnetic reed switch 120. In the embodiment shown in Figs. 2, 3 and 4, the main body 110 further includes two holes 112 corresponding to each other, the magnetic reed switch 120 is disposed corresponding to the two holes 112, so that the swing arm 170 made of a magnetic material can effectively magnetically induce the magnetic reed switch 120. Moreover, the swing arm 170 is preferably two fork prongs 172, the two fork prongs 172 are disposed at two sides of the main body 110, respectively, to facilitate magnetically inducing the magnetic reed switch 120.

The first half housing 162 and the second half housing 164 sealingly cover each other to form the ball 160. In order to make the ball 160 have good structural strength and good sealing effect, seams between the first half housing 162 and the second half housing 164 are welded together. A flange 166 protrudes from the first half housing 162, an edge of the second half housing 164 includes an annular fastener 168, and the annular fastener 168 fastens the flange 166.

Referring to Figs. 1 to 4, the annular fastener 168 preferably fastens the flange 166 in an annular manner. However, in other embodiments, the annular fastener 168 can include a plurality of fastening elements (not illustrated) for fastening the flange 166. Furthermore, the flange 166 at the edge of the first half housing 162 and the annular fastener 168 at the edge of the second half housing 164 can be interchanged; the present invention is not limited in this regard.

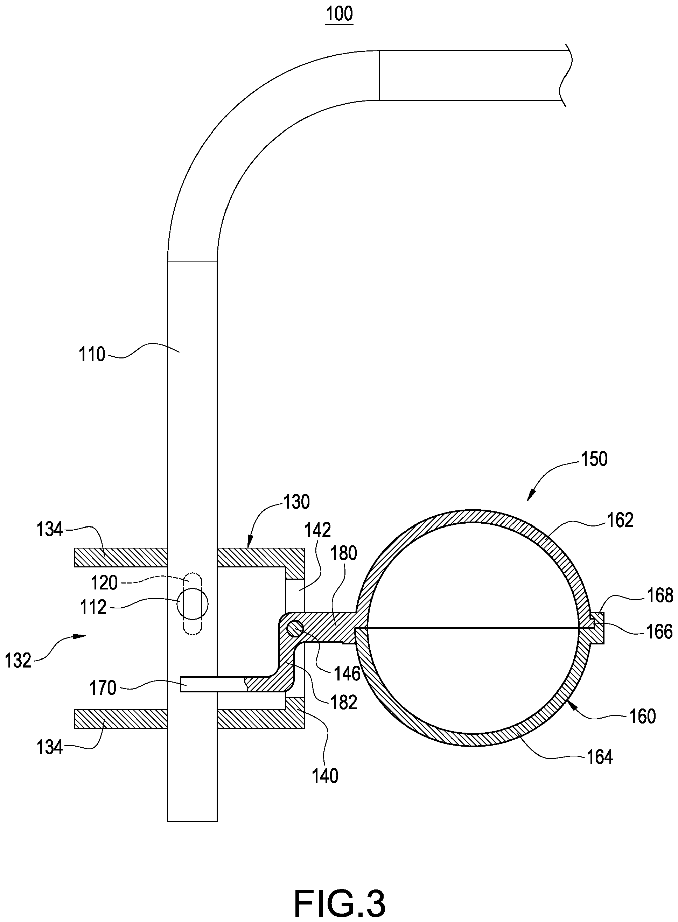

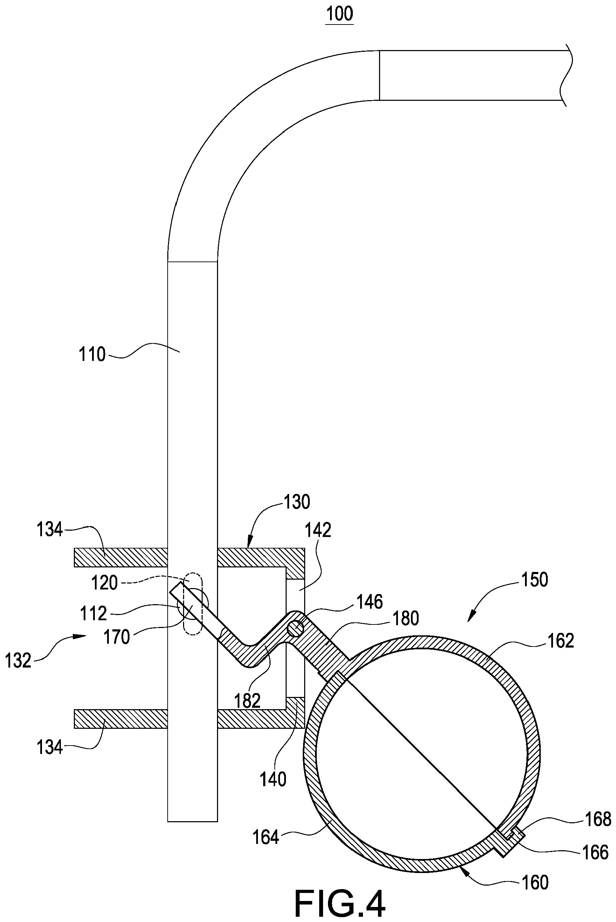

In the embodiment shown in Figs. 3 and 4, the float member 150 is preferably constituted by two parts, i.e. one part is the second half housing 164 while the other part is integrally formed by the annular fastener 168, the supporter 180 and the swing arm 170 so as to be assembled to the first half housing 162. However, in other embodiments, the float member 150 can be constituted by three parts or more; the number of parts may vary according to requirement.

In practice, the main body 110 is laid vertical in a liquid container (not illustrated). As shown in Fig. 4, when the liquid (not illustrated) in the liquid container does not reach a predetermined level of the float member 150, the ball 160 descends by its own gravity. The float member 150 rotates about the pivot 146 to drive the swing arm 170 to move upwards, so that the swing arm 170 is brought to the magnetic reed switch 120 at the holes 112, and the magnetic reed switch 120 is magnetically induced to be switched into the closed-circuit state (the conductive state).

As shown in Fig. 3, when the liquid in the liquid container reaches the predetermined level of the float member 150, the ball 160 is restored to a predetermined position by an upward buoyant force of the liquid. At this point, the ball 160 drives the swing arm 170 to move downwards to be away from the magnetic reed switch 120. Since the swing arm 170 does not magnetically induce the magnetic reed switch 120, the magnetic reed switch 120 is in the open-circuit state. Accordingly, by using he magnetic swing arm 170 movable with respect to the magnetic reed switch 120, various functions can be achieved, e.g. sending out signals, sending out alerts, controlling the liquid to flow in or flow out of the liquid container, or other protection functions.

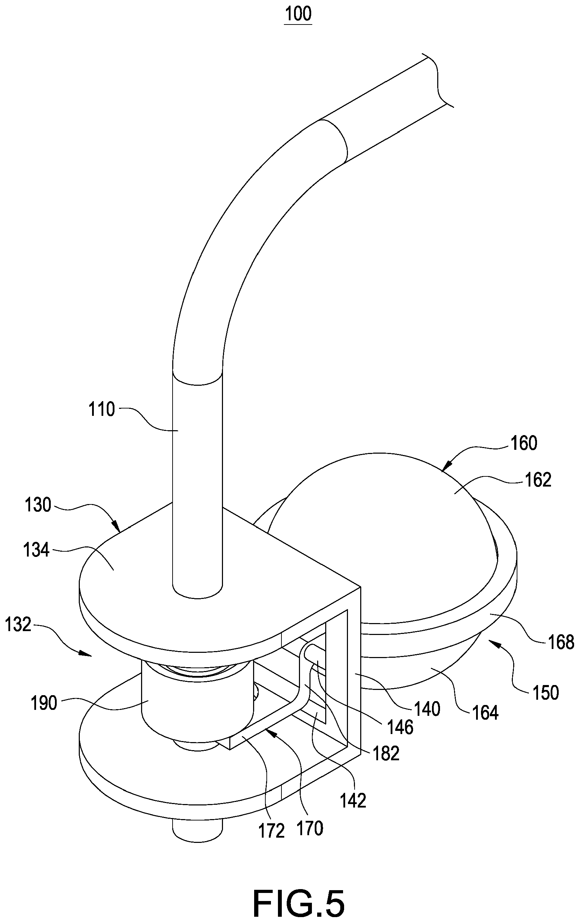

Please refer to Figs. 5, 6 and 7 showing a perspective view and cross-sectional views according to the second embodiment of the present invention. This embodiment is different from the previous embodiment in that, the float level sensing device 100 further includes a magnetic member 190 disposed in the accommodating space 132 and movable with respect to the main body 110. To be specific, the swing arm 170 of the float member 150 is not magnetic, but instead the magnetic member 190 is magnetic, and the magnetic reed switch 120 is switched between the closed-circuit state or the open-circuit state by moving the magnetic member 190 toward or away from the magnetic reed switch 120.

In the second embodiment, the magnetic member 190 includes a through hole 192 receiving the main body 110. The magnetic member 190 is disposed between the swing arm 170 and the magnetic reed switch 120. The magnetic member 190 is pushed by the swing arm 170 to move toward the main body 110 and thereby magnetically induces the magnetic reed switch 120, so that signals or alerts can be sent out to effect a protection function like stopping the liquid from flowing in or out of the liquid container.

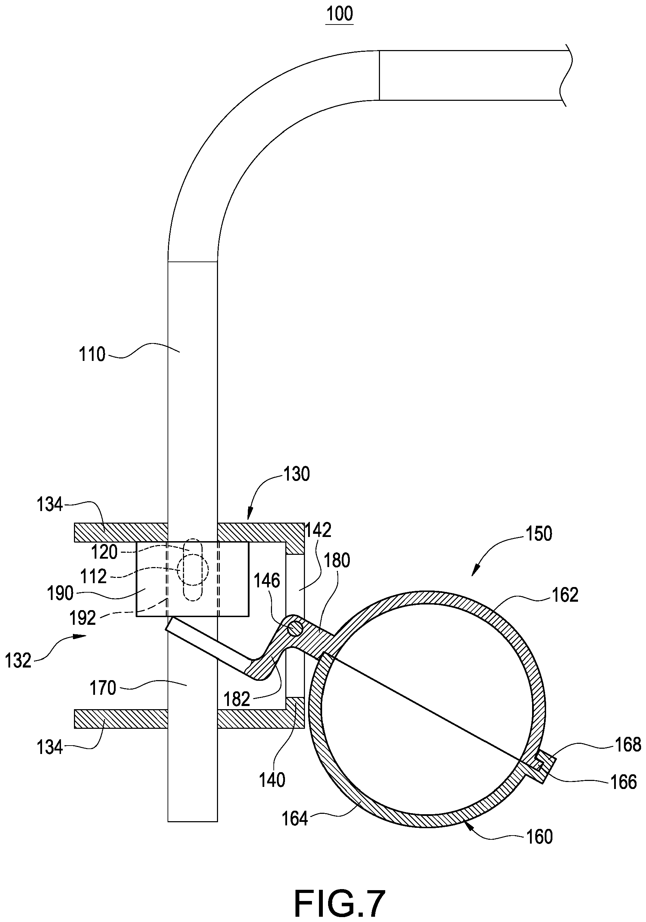

In practice, as shown in Fig. 7, when the liquid (not illustrated) in the liquid container does not reach the predetermined level of the float member 150, the ball 160 moves downwards by its own gravity. The float member 150 is rotated about the pivot 146 and drives the swing arm 170 to move upwards. At this point, the swing arm 170 pushes the magnetic member 190 to move upwards, so that the magnetic member 190 magnetically induces the magnetic reed switch 120 to switch it to the closed-circuit state (the conductive state).

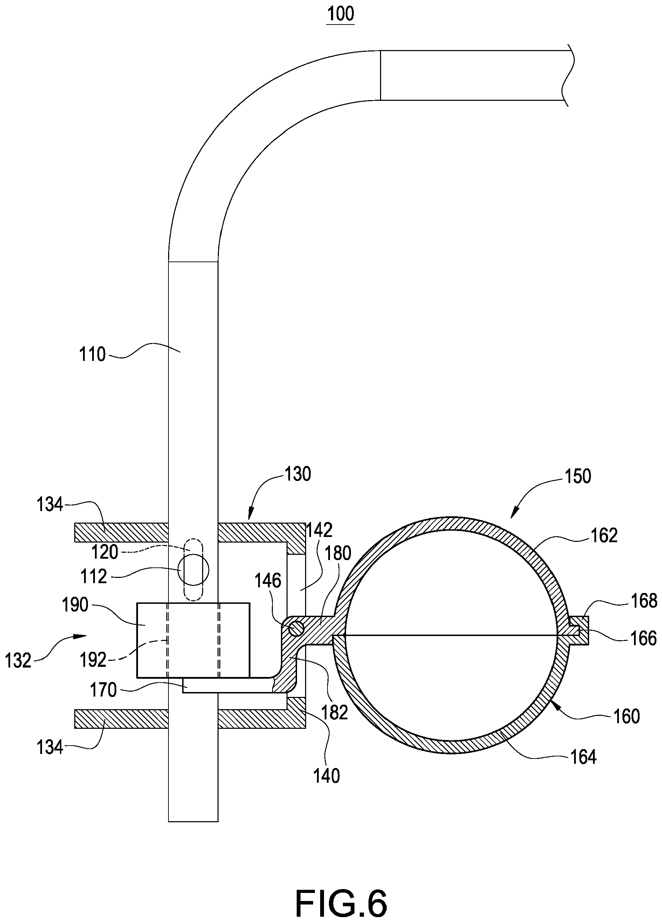

As shown in Fig. 6, when the liquid in the liquid container reaches the predetermined level of the float member 150, the ball 160 is restored to the predetermined position by an upward buoyant force of the liquid. At this point, the ball 160 drives the swing arm 170 to move downwards and to bring the magnetic member 190 away from the magnetic reed switch 120, and therefore the magnetic reed switch 120 is in the open-circuit state.

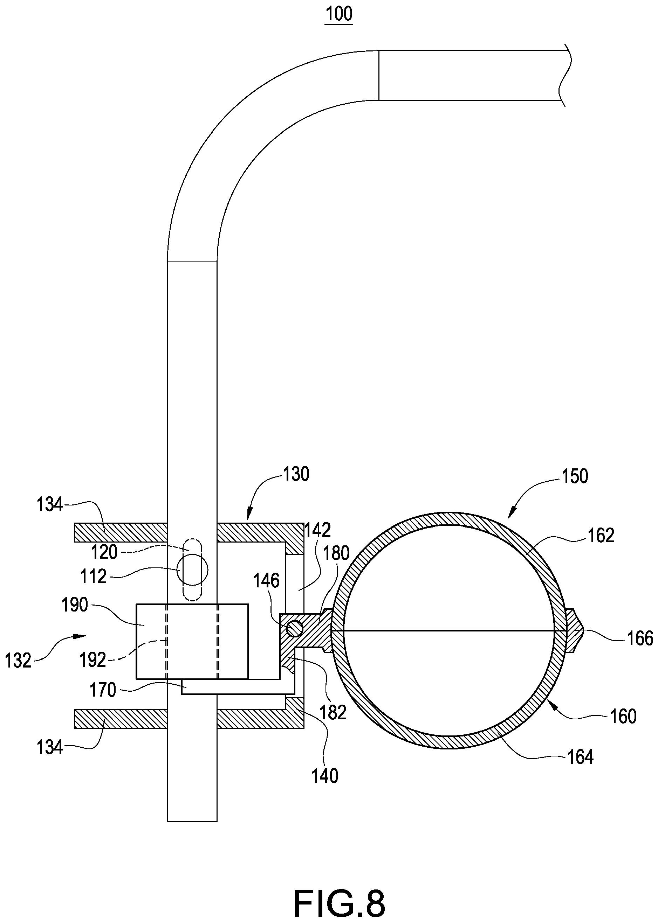

Please refer to Fig. 8 showing a cross-sectional view illustrating the float level sensing device according to the third embodiment of the present invention. As shown in the drawing, the float member 150 is preferably constituted by two parts. In detail, the ball 160 in an integral form is attached to the annular fastener 168 by means of a mold.

It should be noted that, the frame body 130 and the float member 150 are preferably made of stainless steel or other suitable steel to improve heat, impact and erosion resistance. Consequently, the swing arm 170 is prevented from being broken due to the greatly fluctuating liquid level. Moreover, the swing arm 170 extends into the accommodating space 132, so magnetic induction, detection accuracy and reliability between the swing arm 170 and the magnetic reed switch 120 are improved.

## Claims

1. A float level sensing device, comprising:
a main body (110) including a magnetic reed switch (120);
a frame body (130) assembled to the main body (110), the frame body (130) including an accommodating space (132), the magnetic reed switch (120) being disposed corresponding to the accommodating space (132); and
a float member (150), the float member (150) being rotatably pivotally connected to the frame body (130), the float member (150) including a ball (160) and a swing arm (170) connected to the ball (160), the swing arm (170) extending into the accommodating space (132) and being movable with respect to the magnetic reed switch (120) to induce the reed switch ,
**characterized in that** the float member (150) further includes annular fastener (168), which can include a plurality of fastening elements, connected to the ball (160) and the swing arm (170), and/or
wherein the body (110) further includes two holes (112), the magnetic reed switch (120) is disposed corresponding to the two holes (112), the swing arm (170) consists of a magnetic material, and the swing arm (170) magnetically inducing the magnetic reed switch (120).

2. The float level sensing device according to claim 1, wherein the float member (150) further includes a supporter (180) connected to the swing arm (170), a first half housing (162) connected to the supporter (180), and a second half housing (164) sealingly covers the first half housing (162).

3. The float level sensing device according to claim 2, wherein the frame body (130) further includes a rectangular frame (140), an opening formed in the rectangular frame (140) and a pivot (146) pivotally connected to opposite sides of the rectangular frame (140), and the pivot (146) is connected to the supporter (180).

4. The float level sensing device according to any of the claims 2 to 3, wherein a flange (166) protrudes from an edge of the first half housing (162), an edge of the second half housing (164) includes an annular fastener (168), and the annular fastener (168) fastens the flange (166).

5. The float level sensing device according to any of the claims 2 to 4, wherein the first half housing (162) and the second half housing (164) sealingly cover each other to form the ball (160).

6. The float level sensing device according to any of the claims 2 to 5, wherein the float member (150) further includes a bent portion (182) disposed between the supporter (180) and the swing arm (170), and the bent portion (182) bents toward the second half housing (164).

7. The float level sensing device according to any of the claims 1 to 6, wherein the swing arm (170) is two fork prongs (172), and the two fork prongs (172) are disposed at two sides of the body (110), respectively.

8. The float level sensing device according to any of the claims 1 to 7, further comprising a magnetic member (190) disposed in the accommodating space (132) and movable with respect to the main body (110).

9. The float level sensing device according to claim 8, wherein the magnetic member (190) includes a through hole (192) receiving the main body (110).

10. The float level sensing device according to claim 8 or 9, wherein the magnetic member (190) is disposed between the swing arm (170) and the magnetic reed switch (120).

11. The float level sensing device according to any of the claims 8 to 10, wherein the magnetic member (190) is pushed by the swing arm (170) to move toward the main body (110) and thereby magnetically induces the magnetic reed switch (120).

## Patentansprüche

1. Eine Schwimmer-Füllstandmessvorrichtung, bestehend aus:
einem Hauptkörper (110) mit einem magnetischen Reedschalter (120);
einen Rahmenkörper (130), der mit dem Hauptkörper (110) zusammengebaut ist, wobei der Rahmenkörper (130) einen Aufnahmeraum (132) aufweist und der magnetische Reedschalter (120) entsprechend dem Aufnahmeraum (132) angeordnet ist; und
ein Schwimmerelement (150), wobei das Schwimmerelement (150) drehbar schwenkbar mit dem Rahmenkörper (130) verbunden ist, wobei das Schwimmerelement (150) eine Kugel (160) und einen mit der Kugel (160) verbundenen Schwenkarm (170) aufweist, wobei sich der Schwenkarm (170) in den Aufnahmeraum (132) erstreckt und in Bezug auf den magnetischen Reedschalter (120) beweglich ist, um den Reedschalter zu induzieren,
**dadurch gekennzeichnet,**
**dass** das Schwimmerelement (150) ferner ein ringförmiges Befestigungselement (168) aufweist, das eine Vielzahl von Befestigungselementen enthalten kann, die mit der Kugel (160) und dem Schwenkarm (170) verbunden sind,
und/oder
wobei der Körper (110) ferner zwei Löcher (112) aufweist, der magnetische Reed-Schalter (120) entsprechend den beiden Löchern (112) angeordnet ist, der Schwenkarm (170) aus einem magnetischen Material besteht und der Schwenkarm (170) den magnetischen Reed-Schalter (120) magnetisch induziert.

2. Die Schwimmer-Füllstandmessvorrichtung nach Anspruch 1, wobei das Schwimmerelement (150) ferner einen mit dem Schwenkarm (170) verbundenen Träger (180), ein mit dem Träger (180) verbundenes erstes Halbgehäuse (162) und ein zweites Halbgehäuse (164) aufweist, das das erste Halbgehäuse (162) abdichtend abdeckt.

3. Die Schwimmer-Füllstandmessvorrichtung nach Anspruch 2, wobei der Rahmenkörper (130) ferner einen rechteckigen Rahmen (140), eine in dem rechteckigen Rahmen (140) ausgebildete Öffnung und einen Drehzapfen (146) aufweist, der schwenkbar mit gegenüberliegenden Seiten des rechteckigen Rahmens (140) verbunden ist, und der Drehzapfen (146) mit dem Träger (180) verbunden ist.

4. Die Schwimmer-Füllstandmessvorrichtung nach einem der Ansprüche 2 bis 3, wobei ein Flansch (166) von einer Kante des Gehäuses der ersten Gehäusehälfte (162) vorsteht, eine Kante des Gehäuses der zweiten Gehäusehälfte (164) ein ringförmiges Befestigungselement (168) enthält und das ringförmige Befestigungselement (168) den Flansch (166) befestigt.

5. Die Schwimmer-Füllstandmessvorrichtung nach einem der Ansprüche 2 bis 4, wobei die erste Gehäusehälfte (162) und die zweite Gehäusehälfte (164) einander abdichtend abdecken, um die Kugel (160) zu bilden.

6. Die Schwimmer-Füllstandmessvorrichtung nach einem der Ansprüche 2 bis 5, wobei das Schwimmerelement (150) ferner einen gebogenen Abschnitt (182) aufweist, der zwischen dem Träger (180) und dem Schwenkarm (170) angeordnet ist, und der gebogene Abschnitt (182) in Richtung auf das Gehäuse (164) der zweiten Gehäusehälfte gebogen ist.

7. Die Schwimmer-Füllstandmessvorrichtung nach einem der Ansprüche 1 bis 6, wobei der Schwenkarm (170) aus zwei Gabelzinken (172) besteht und die beiden Gabelzinken (172) jeweils an zwei Seiten des Körpers (110) angeordnet sind.

8. Die Schwimmer-Füllstandmessvorrichtung nach einem der Ansprüche 1 bis 7 umfasst ferner ein magnetisches Element (190), das in dem Aufnahmeraum (132) angeordnet und in Bezug auf den Hauptkörper (110) beweglich ist.

9. Schwimmer-Füllstandmessvorrichtung nach Anspruch 8, wobei das magnetische Element (190) ein Durchgangsloch (192) aufweist, das den Hauptkörper (110) aufnimmt.

10. Die Schwimmer-Füllstandmessvorrichtung nach Anspruch 8 oder 9, wobei das magnetische Element (190) zwischen dem Schwenkarm (170) und dem magnetischen Reedschalter (120) angeordnet ist.

11. Die Schwimmer-Niveausensorvorrichtung nach einem der Ansprüche 8 bis 10, wobei das magnetische Element (190) durch den Schwenkarm (170) in Richtung des Hauptkörpers (110) gedrückt wird und dadurch den magnetischen Reedschalter (120) magnetisch induziert.

## Revendications

1. Un dispositif de détection de niveau à flotteur, comprenant:
un corps principal (110) comprenant un commutateur magnétique à lames souples (120);
un corps de cadre (130) assemblé au corps principal (110), le corps de cadre (130) comprenant un espace de logement (132), le commutateur magnétique à lames souples (120) étant disposé en correspondance avec l'espace de logement (132); et
un élément de flotteur (150), l'élément de flotteur (150) étant connecté de manière rotative et pivotante au corps de cadre (130), l'élément de flotteur (150) comprenant une boule (160) et un bras oscillant (170) connecté à la balle (160), le bras oscillant (170) s'étendant dans l'espace de logement (132) et étant mobile par rapport au commutateur magnétique à lames souples (120) pour induire le commutateur à lame souple,
**caractérisé en ce que** l'élément de flotteur (150) comprend en outre une attache annulaire (168), qui peut comporter une pluralité d'éléments d'attaches, connectée à la boule (160) et au bras oscillant (170), et/ou
dans lequel le corps comporte en outre deux trous (112), le commutateur à lame souples (120) étant disposé en correspondance avec les deux trous (112), le bras oscillant (170) consistant en un matériau magnétique, et le bras oscillant (170) induisant magnétiquement le commutateénanss ave à lames souples magnétique (120).

2. Le dispositif de détection de niveau à flotteur selon la revendication 1, dans lequel l'élément de flotteur (150) comporte en outre un support (180) connecté au bras oscillant (170), un premier demi-boîtier (162) connecté au support (180) et un second demi-boîtier (164) recouvrant de manière étanche le premier demi-boîtier (162).

3. Le dispositif de détection de niveau à flotteur selon la revendication 2, dans lequel le corps cadre (130) comprend en outre un cadre rectangulaire (140), une ouverture formée dans le cadre rectangulaire (140) et un pivot (146) relié de façon pivotante aux côtés opposés du cadre rectangulaire (140), et le pivot (146) étant relié au support (180).

4. Le dispositif de détection de niveau à flotteur selon l'une quelconque des revendications 2 à 3, dans lequel une bride (166) dépasse d'un bord du premier demi-boîtier (162), un bord du deuxième demi-boîtier (164) comprend une attache annulaire (168), et l'attache annulaire (168) fixe la bride (166).

5. Le dispositif de détection de niveau à flotteur selon l'une quelconque des revendications 2 à 4, dans lequel le premier demi-boîtier (162) et le second demi-boîtier (164) se couvrent de manière étanche l'un et l'autre pour former la boule (160).

6. Le dispositif de détection de niveau de flotteur selon l'une quelconque des revendications 2 à 5, dans lequel l'élément de flotteur (150) comprend en outre une partie courbée (182) disposée entre le support (180) et le bras oscillant (170), et la partie courbée (182) se courbant vers le second demi-boîtier (164).

7. Le dispositif de détection de niveau de flotteur selon l'une quelconque des revendications 1 à 6, dans lequel le bras oscillant (170) est constitué de deux dents de fourche (172), et les deux dents de fourche (172) sont disposées sur deux côtés du corps (110), respectivement.

8. Le dispositif de détection de niveau à flotteur selon l'une quelconque des revendications 1 à 7, comprenant en outre un élément magnétique (190) disposé dans l'espace de logement (132) et mobile par rapport au corps principal (110).

9. Le dispositif de détection de niveau à flotteur selon la revendication 8, dans lequel l'élément magnétique (190) comprend un trou traversant (192) recevant le corps principal (110).

10. Le dispositif de détection de niveau à flotteur selon la revendication 8 ou 9, dans lequel l'élément magnétique (190) est disposé entre le bras oscillant (170) et le commutateur magnétique à lames souples (120).

11. Le dispositif de détection de niveau à flotteur selon l'une quelconque des revendications 8 à 10, dans lequel l'élément magnétique (190) est poussé par le bras oscillant (170) pour se déplacer vers le corps principal (110) et ainsi induire magnétiquement le commutateur magnétique à lames (120)).
